# EUROPÄISCHE PATENTANMELDUNG

(11) **EP 0 781 648 A2**
(43) Veröffentlichungstag der Anmeldung: **02.07.1997**
(21) Anmeldenummer: 96120573.9
(22) Anmeldetag: 20.12.1996
(51) Int. Cl.: B32B 5/28, B32B 27/20

(54) **Verstärkte, mehrschichtige Bauteile aus Thermoplasten**

(30) Priorität: 27.12.1995 AT 2106/95
(71) Anmelder: PCD-Polymere Gesellschaft m.b.H., A-2323 Schwechat-Mannswörth (AT); Lenser Kunststoff-Presswerk GmbH & Co. KG, 89242 Senden/Jller (DE)
(72) Erfinder: Hackl, Franz, 89250 Senden (DE); Ruhland, Heinz, 73312 Geislingen (DE); Mayer, Ludwig, 88319 Aitrach (DE); Penz, Wolfgang, 4210 Unterweitersdorf (AT); Stockreiter, Wolfgang, Dipl.-Ing., 4043 Linz (AT); Stadlbauer, Wolfram, Dipl.-Ing., 4040 Linz (AT)
(74) Vertreter: Kunz, Ekkehard, Dr.

(57) **Zusammenfassung**

Verstärkte Mehrschicht-Bauteile aus Thermoplasten, aus mindestens einer Kernschicht, die mit mindestens einer oberen und einer unteren Deckschicht verbunden ist, wobei die Kernschicht Verstärkungsmaterial in nicht strukturierter und im Wesentlichen unzusammenhängender Form und die Deckschichten als Verstärkungsmaterial Fasern in Form eines zusammenhängenden Flächengebildes enthalten, wobei auf die Deckschichten gegebenenfalls eine oder mehrere verstärkungsfreie Oberflächenschichten aufgebracht sind.

## Beschreibung

Bauteile mit Schichtaufbau sind seit längerer Zeit bekannt und finden in vielen Gebieten Anwendung. So werden beispielsweise hochspezialisierte Sperrholzplatten für moderne Skier, bei welchen je eine hochverstärkte Basis- und Deckschicht von einem Kern variabler Dicke und verschiedenster Zusammensetzung in einem definierten, variablen Abstand gehalten werden. Die Biegesteifigkeit des Skis wird dabei durch die Eigenschaften der Schichten, speziell ihrer Dicke, genau den Erfordernissen entsprechend eingestellt. Hohe Biegesteifigkeit wird herkömmlicherweise durch Deckschichten mit viel Verstärkungsfasern pro Flächeneinheit und durch großen Abstand derselben, d.h. durch einen dicken Kern erreicht. Beides bedeuted hohes Gewicht und in jedem Fall hohe Kosten pro Flächeneinheit.
Eine weitere Möglichkeit hohe Biegesteifigkeit zu erzielen, sind sogenannte Honeycomb-Platten.
Aus der DE-OS 42 08 812 ist eine mehrschichtige Leichtbauplatte bekannt, die aus einem innenliegenden Stützkern mit Wabenstruktur (Honeycombs) und zwei außenliegenden Deckschichten aus Thermoplastfolien aufgebaut ist. Derartige Leichtbauplatten werden bevorzugt als Strukturbauteile, etwa im Kraftfahrzeug- oder Flugzeugbau oder im Bauwesen verwendet, und zeichnen sich vor allem durch ihre hohe Festigkeit und Steifigkeit bei gleichzeitig niedriger Dichte aus. Der Nachteil dieser Platten liegt insbesondere in der aufwendigen Herstellung des wabenförmig strukturierten Stützkerns und den dadurch bedingten hohen Kosten.
Hohe Biegesteifigkeit in Kombination mit Elastizität ist beispielsweise bei Verwendung im Fußbodenbau, speziell bei Kabelzwischenböden oder im Sportbodenbau von ausschlaggebender Bedeutung.

Es stellte sich demnach die Aufgabe, Bauteile zu finden, die einen einfacheren Stützkern enthalten und gleichzeitig ein zufriedenstellendes Eigenschaftsprofil mit den Eigenschaften der Biegesteifigkeit in Kombination zulässige Verformung aufweisen.
Die Lösung der Aufgabe ergab sich durch eine Konstruktion, bei der die Kernschichten Verstärkungsmaterial in nicht strukturierter, im wesentlichen unzusammenhängender Form enthalten, wobei im Falle von Fasern diese keine bevorzugte Orientierung aufweisen und im Gegensatz dazu die Deckschichten mit Fasern in Form eines zusammenhängenden Flächengebildes, in dem die Fasern im wesentlichen parallel zur Oberfläche orientiert sind, verstärkt sind.

Gegenstand der Erfindung sind demnach verstärkte Mehrschicht-Bauteile aus Thermoplasten aus mindestens einer Kernschicht die mit mindestens einer oberen und einer unteren Deckschicht verbunden ist, die dadurch gekennzeichnet sind, daß die Kernschicht Verstärkungsmaterial in nicht strukturierter und im wesentlichen unzusammenhängender Form und die Deckschichten als Verstärkungsmaterial Fasern in Form eines zusammenhängenden Flächengebildes enthalten, wobei auf die Deckschichten gegebenenfalls eine oder mehrere verstärkungsfreie Oberflächenschichten aufgebracht sind.

Als Matrixmaterial für die Mehrschicht-Bauteile aus Thermoplasten können dabei alle geläufigen thermoplastisch verformbaren Kunststoffe eingesetzt werden. Beispiele für derartige Thermoplaste sind z. B. Polyolefine, Polyamide, Polyester, Polystyrol, Styrol-Copolymere, Polyvinylchlorid, Polyethersulfone, Polyethylen- oder -butylenterephthalat, thermoplastische Polyurethane, Polyimide, Polysulfone, Polyetherketone, Polyetherimide, Polyphenylensulfid, aber auch hochfeste bzw. hochtemperaturbeständige Thermoplasten, wie etwa Polycarbonate, Polyoxymethylen und dergleichen. Bevorzugt verwendet werden Polyolefine, Polyamide, Polyethersulfone, Polyethylen- oder-butylenterephthalat, Polystyrole, Polyvinylchlorid, Polycarbonate, Polyetherketone oder Polyoxymethylen. Besonders bevorzugt werden Polyolefine, wie etwa Polyethylene, Polypropylene oder Ethylen-Propylen-Copolymere eingesetzt.

Das Matrixmaterial für die Kernschicht und für die Deckschichten kann dabei sowohl verschieden als auch gleich sein, bevorzugt werden gleiche Matrixmaterialien verwendet.

Eine Kernschicht der erfindungsgemäßen Bauteile enthält Verstärkungsmaterial in nicht strukturierter und im wesentlichen unzusammenhängender Form. Dies sind entweder Fasern oder nicht-faserförmige Materialien. Unter Fasern sind Fasern aus Glas, Kohle, Aramid, Keramik oder Metallen, sowie Naturfasern als auch synthetische bzw. halbsynthetische Fasern, die bei der Verarbeitungstemperatur der Matrixpolymeren nicht oder nicht wesentlich geschädigt werden, wie etwa Zellulosefasern oder Hanf, zu verstehen. Die Fasern können einzeln oder gebündelt sein. Bevorzugt werden Glasfasern verwendet. Die Faserlänge, sowie die Faserdicke kann dabei in Abhängigkeit vom gewünschten Einsatzgebiet bzw. vom Herstellverfahren variieren. Es erweist sich als vorteilhaft, Faserlängen von über 1 mm einzusetzen. Die Faserlängen liegen jedoch bevorzugt bei über 3 mm, besonders bevorzugt zwischen 5 und 25 mm. Grundsätzlich ist es jedoch möglich, jede Faserlänge einzusetzen, sofern durch das Herstellverfahren eine Wirrlage der Fasern erzielt wird. Die Faserdicke liegt bevorzugt bei etwa 10 bis 26 µm. Die verwendeten Fasern weisen dabei in der Kernschicht keine bevorzugte Orientierung auf, sie liegen wirr durcheinander.
Nicht-faserförmige Materialien, die sich zur Verstärkung der Kernschichten eignen sind anorganische Füllstoffe wie beispielsweise Talkum, Kreide, Gesteinsmehl, Holzmehl oder Glasperlen. Bevorzugt wird Talkum als nicht-faserförmiges Verstärkungsmaterial eingesetzt. Die Teilchengröße des nicht-faserförmigen Verstärkungsmaterials liegt bevorzugt bei 3 bis 60 µm.
Der Gehalt an Verstärkungsmaterial in der Kernschicht liegt bevorzugt zwischen 1 und 50 Gew.% , besonders bevorzugt zwischen 5 und 40 Gew.%.
Die Herstellung der Kernschichten der erfindungsgemäßen Bauteile erfolgt beispielsweise durch aus dem Stand der Technik bekannte Herstellungsverfahren, beispielsweise durch einfaches Zumischen des Verstärkungsmaterials zum granulatförmigen Matrixmaterial oder direkt zum geschmolzenen Matrixmaterial und anschließender Extrusion.

Zur Verstärkung der Kernschichten bzw. als Kernschicht selbst, kann weiters auch ein Recyclat aus faserverstärktem Polymer verwendet weden. So können beispielsweise Ausschußplatten oder Verschnitte, die aus faserverstärkten, einem oder mehreren wie oben angeführten Thermoplasten bestehen, zerkleinert und dem Matrixmaterial für den Kern zugeführt werden, bzw. kann der Kern vollständig aus diesem Recyclat gefertigt werden.

Gegebenenfalls können der Kernschicht noch weitere übliche Zusätze, wie etwa Farbstoffe, Pigmente, Flammhemmer u.a. zugegeben werden.

Die Deckschichten der erfindungsgemäßen Bauteile sind im Gegensatz zu den Kernschichten mit Fasern in Form eines zusammenhängenden Flächengebildes verstärkt, wobei die Fasern im Wesentlichen parallel zur Oberfläche der Deckschicht orientiert sind. Zusammenhängende Flächengebilde können Gewebe, Gelege, Gewirke, Gestricke, Vliese oder Matten sein, die sowohl isotrop als auch anisotrop sein können. Die verwendeten Fasern können dabei wiederum Fasern aus Glas, Kohle, Aramid, Keramik oder Metallen, sowie Naturfasern als auch synthetische bzw. halbsynthetische Fasern, die bei der Verarbeitungstemperatur der Matrixpolymeren nicht oder nicht wesentlich geschädigt werden, wie etwa Zellulosefasern oder Hanf, sein. Bevorzugt werden wiederum Glasfasern eingesetzt. Die Faserlänge ist dabei vom eingesetzten Flächengebilde bzw. dessen Herstellverfahren abhängig.
Es erweist sich als vorteilhaft, Faserlängen von über 25 mm einzusetzen. Bevorzugt werden beispielsweise für Vliese und Matten Fasern zwischen 50 und 200 mm verwendet. Die Verwendung von Endlosfasern ist beispielsweise für Gelege, Gewirke, Gewebe und Gestricke bevorzugt.
Der Fasergehalt in der verstärkten Deckschicht liegt bevorzugt zwischen 5 und 70 Gew.% , besonders bevorzugt zwischen 15 und 60 Gew.%.
Die Deckschichten können ebenfalls übliche Zusätze wie Farbstoffe, Pigmente, Stabilisatoren u.a. enthalten.

Die Herstellung der Deckschicht kann ebenfalls durch aus dem Stand der Technik bekannte Herstellungsverfahren erfolgen, beispielsweise durch Imprägnieren des zur Verstärkung eingesetzten Flächengebildes mit dem entsprechenden Matrixpolymeren mittels Doppelbandpresse oder Etagenpresse.

Die erfindungsgemäßen Mehrschicht-Bauteile bestehen aus mindestens einer Kernschicht, die mit mindestens einer oberen und einer unteren Deckschicht verbunden ist. Die Mehrschicht-Bauteile können aber auch aus mehr als 3 Schichten bestehen, wobei die Kernschicht aus einer oder mehreren Lagen aufgebaut sein kann. Ebenso können die Deckschichten mehrlagig sein, etwa zur Erzielung bestimmter gewünschter, richtungsabhängiger Eigenschaften, oder zur Erzielung einer gewünschten Optik.

Weiters können auf jede einzelne der Deckschichten eine oder mehrere verstärkungsfreie Oberflächenschichten aufgebracht sein. Diese Oberflächenschichten können weitere Additiva enthalten, wie etwa Stabilisatoren, Antistatika, leitfähige Zusatzstoffe, Flammschutzmittel oder Farbstoffe.

Bevorzugt bestehen die Bauteile aus nur einer in der Mitte liegenden Kernschicht und je einer oben und unten angeordneten Deckschicht.
Die Dicke und Form der Bauteile kann je nach Einsatzgebiet variieren. So können beispielsweise planparallele Platten, aber auch Bauteile mit unterschiedlicher Dicke hergestellt werden. Die Schichtdicke der erfindungsgemäßen Bauteile liegt bevorzugt bei einer Gesamtdicke von mindestens 2 mm und maximal 200 mm, besonders bevorzugt bis maximal 100 mm. Schichtdicken über 200 mm sind jedoch gewünschtenfalls auch möglich.

Die Herstellung der erfindungsgemäßen Bauteile erfolgt dadurch, daß die entsprechende Anzahl der oben beschriebenen Kern- und Deckschichten in einer Presse zu der entsprechenden Form miteinander verpreßt werden.
Je nach verwendeten Thermoplasten kann es von Vorteil sein zwischen den einzelnen Schichten Haftvermittler oder Klebefolien zu verwenden, um die Verbindung der Deckschichten mit der Kernschicht zu verbessern.
Eine weitere Herstellungsmöglichkeit ist beispielsweise das gemeinsame Verpressen von Matrixmaterial für die Kernschicht, das in Form von Granulat, gemischt mit dem entsprechenden Verstärkungsmaterial, zwischen zwei Formen, die die bereits vorgefertigten Deckschichten enthalten, eingebracht wird. Weiters ist es auch möglich, die Bauteile in nur einem Arbeitsschritt zu fertigen, d.h., daß die Deckschichten ebenfalls nicht vorgefertigt sind.

Die dabei erhaltenen mehrschichtigen Bauteile weisen eine hohe Biegesteifigkeit bei hoher zulässiger Verformung auf und eignen sich deshalb besonders zur Herstellung von Fußböden, insbesondere von Kabelzwischenböden oder Sportböden, von Filterelementen für Filterpressen, Tankfilter, Druck- Trommel-, Scheibenfilter und Filternutschen. Weiters eignen sie sich zur Herstellung von verschiedenen Platten, Halbzeugen und Formteilen die bei begrenzter Dicke, hohe Steifigkeit und hohe zulässige Verformung aufweisen sollen.

### Beispiel 1:

Auf einer Etagenpresse wurde eine Platte aus einer Kernschicht und je einer oberen und einer unteren Deckschicht durch Pressen bei 200°C und einem Preßdruck von 20 bar hergestellt. Die Heizzeit betrug 15 min, die Kühlzeit 20 min. Die Platte wies folgende Zusammensetzung auf:

| | | |
|---|---|---|
| Obere Deckschicht: | DAPLEN TC-U20 (Fa. PCD Polymere) | 1,8 mm |
| Kernschicht | DAPLEN BEC 50 T30 (Fa. PCD Polymere) | 6,4 mm |
| Untere Deckschicht: | DAPLEN TC-U20 (Fa. PCD Polymere) | 1,8 mm |

Die Gesamthöhe der Platte betrug somit 10 mm.
Bei DAPLEN TC-U20 handelt es sich um glasmattenverstärktes Polypropylen mit einem Flächengewicht von 1870 g/m² und einem Glasfaseranteil von 20 Gew.%.
DAPLEN BEC 50 T30 ist hingegen ein Polypropylen, das 30 Gew.% Talkum als Verstärkungsmittel enthält.
Die Platten wurden nach ISO 178 einem 3-Punkt-Biegeversuch unterzogen. Der dabei ermittelte Biegemodul betrug 4000 N/mm².

### Beispiel 2:

Analog Beispiel 1 wurde eine Platte hergestellt, die als Kernschicht ein Recyclat aus einer 2,1 mm dicken DAPLEN TC-U30 (Fa. PCD Polymere) Platte enthielt.
Die Deckschichten blieben unverändert. Die Gesamthöhe der Platte betrug wiederum 10 mm. Das gemäß ISO 178 ermittelte Biegemodul betrug 4800 N/mm².

### Beispiel 3:

Als Vergleichsprobe wurde analog Beispiel 1 eine Platte, die eine unverstärkte Kernschicht aus Daplen BE 50 natur enthielt, hergestellt.
Die Gesamtplatte wies wiederum eine Gesamthöhe von 10 mm auf. Das gemäß ISO 178 ermittelte Biegemodul betrug 3200 N/mm².

## Patentansprüche

1. Verstärkte Mehrschicht-Bauteile aus Thermoplasten, aus mindestens einer Kernschicht, die mit mindestens einer oberen und einer unteren Deckschicht verbunden ist, dadurch gekennzeichnet, daß die Kernschicht Verstärkungsmaterial in nicht strukturierter und im Wesentlichen unzusammenhängender Form und die Deckschichten als Verstärkungsmaterial Fasern in Form eines zusammenhängenden Flächengebildes enthalten, wobei auf die Deckschichten gegebenenfalls eine oder mehrere verstärkungsfreie Oberflächenschichten aufgebracht sind.

2. Verstärkte Mehrschicht-Bauteile nach Anspruch 1, dadurch gekennzeichnet, daß als Thermoplasten Polyolefine, Polyamide, Polyetherketone, Polyethersulfone, Polyethylen- oder -butylenterephthalat, Polystyrole, Polyvinylchlorid, Polycarbonate oder Polyoxymethylen verwendet werden.

3. Verstärkte Mehrschicht-Bauteile nach Anspruch 1, dadurch gekennzeichnet, daß als Thermoplasten Polyolefine verwendet werden.

4. Verstärkte Mehrschicht-Bauteile nach Anspruch 1, dadurch gekennzeichnet, daß sie eine Kernschicht und je eine obere und untere Deckschicht aufweisen.

5. Verstärkte Mehrschicht-Bauteile nach Anspruch 1, dadurch gekennzeichnet, daß als Verstärkungsmaterial für die Kernschicht Einzelfasern oder nicht-faserförmige anorganische Füllstoffe verwendet werden.

6. Verstärkte Mehrschicht-Bauteile nach Anspruch 5, dadurch gekennzeichnet, daß als Verstärkungsmaterial Fasern aus Glas, Kohle, Aramid, Keramik oder Metallen oder Naturfasern, sowie synthetische als auch halbsynthetische Fasern, die bei der Verarbeitung des Thermoplasten nicht oder nicht wesentlich geschädigt werden, verwendet werden.

7. Verstärkte Mehrschicht-Bauteile nach Anspruch 5, dadurch gekennzeichnet, daß als nicht-faserförmige anorganische Füllstoffe Talkum, Kreide, Gesteinsmehl oder Glasperlen verwendet werden.

8. Verstärkte Mehrschicht-Bauteile nach Anspruch 1, dadurch gekennzeichnet, daß als Verstärkungsmaterial für die Deckschichten Fasern in Form eines Gewebes, Geleges, Gewirkes, Gestrickes, Vlieses oder in Form von Matten verwendet werden.

9. Verstärkte Mehrschicht-Bauteile nach Anspruch 1, dadurch gekennzeichnet, daß der Anteil an Verstärkungsmaterial in den Kernschichten 1 bis 50 Gew. % beträgt.

10. Verstärkte Mehrschicht-Bauteile nach Anspruch 1, dadurch gekennzeichnet, daß der Anteil an Verstärkungsmaterial in den Deckschichten 5 bis 70 Gew.% beträgt.

11. Verstärkte Mehrschicht-Bauteile nach Anspruch 1, dadurch gekennzeichnet, daß die verstärkungsfreien Oberflächenschichten Additiva wie Stabilisatoren, Antistatika, leitfähige Zusatzstoffe, Flammschutzmittel oder Farbstoffe enthalten.
